# EUROPÄISCHE PATENTSCHRIFT

(11) **EP 1 113 568 B1**
(45) Veröffentlichungstag und Bekanntmachung des Hinweises auf die Patenterteilung: **12.10.2005**
(21) Anmeldenummer: 00128412.4
(22) Anmeldetag: 27.12.2000
(51) Int. Cl.: H02K 7/102, H02K 41/02, B66C 23/70, B66F 11/04, B66B 11/04

(54) **Verriegelungselement für elektomagnetische lineare Antriebsvorrichtungen**
Locking element for electromagnetic linear driving apparatus
Elément de verrouillage pour appareil électromagnétique d'entraînement linéaire

(30) Priorität: 30.12.1999 DE 19963893
(43) Veröffentlichungstag der Anmeldung: 04.07.2001
(73) Patentinhaber: Palfinger Europe GmbH, 5101 Bergheim (AT)
(72) Erfinder: Jennissen, Franz-Peter, 86316 Friedberg-Stätzling (DE)
(74) Vertreter: Hofinger, Engelbert

(56) Entgegenhaltungen:
- EP-A- 0 471 464
- DE-A- 2 335 607
- DE-A- 19 641 879
- GB-A- 2 243 133
- US-A- 4 819 564
- US-A- 5 195 615
- PATENT ABSTRACTS OF JAPAN vol. 012, no. 493 (E-697), 22. Dezember 1988 (1988-12-22) & JP 63 206153 A (FUJITSU LTD), 25. August 1988 (1988-08-25)

## Beschreibung

Die vorliegende Erfindung betrifft eine Antriebsvorrichtung zur linearen Bewegung zweier Maschinenteile von Baumaschinen zueinander, wobei die Antriebsvorrichtung aus einem elektromagnetischen Linearantrieb besteht.

Aus dem Stand der Technik ist bekannt, daß zur Ausführung von linearen Bewegungen, insbesondere im Baumaschinenbereich, mit Hydraulikzylindern gearbeitet wird. Durch die Bewegung der Kolbenstange im Zylinder und der entsprechenden mechanischen Kopplung und Übertragung auf die betreffenden Maschinenteile werden lineare Bewegungen ausgeführt.

Nachteilig ist hier jedoch unter anderem das hohe Gewicht der verwendeten Zylinder. Dadurch ergeben sich bauliche und mechanische Einschränkungen bei der Konstruktion und Herstellung von Baumaschinen, die nur sehr schwer überwunden werden können.

Dabei ist es aus der DE 2335607 bekannt, die Bremse einer Transporteinrichtung so auszugestalten, dass diese bei einem Stromausfall während des Betriebes eine solche Bremswirkung entfaltet, dass ein Abbremsen bis zum Stillstand und ein Aufrechterhalten des Stillstandes sichergestellt ist. Aus der EP 0471464 A2 ist es darüber hinaus noch bekannt, bei Aufzügen, welche einen Linearantrieb aufweisen, das Aufrechterhalten bestimmter Stellungen der Aufzugskabine an der Aufzugskabine selbst Verriegelungseinrichtungen oder Sperreinrichtung vorzusehen, welche den Aufzug an einer Führungsschiene bezüglich dieser feststehend zu halten. Dabei ist die Verriegelungseinrichtung unabhängig von dem Linearantrieb ausgebildet.

Zur linearen Bewegung zweier Elemente wie Maschinenteile von Baumaschinen ist als Antriebsvorrichtung ein elektromagnetischer Linearantrieb bekannt. Durch die Verwendung eines leichtgewichtigen elektromagnetischen Linearantriebs ist gewährleistet, daß nur relativ wenig Gewicht der Antriebsvorrichtung an den Maschinenteilen selbst anliegt, so daß sich hierdurch keine konstruktiven Probleme ergeben. Allerdings ist der Einsatz von elektromagnetischen Linearantrieben, insbesondere in mobilen Baumaschinen wie zum Beispiel Hubarbeitsbühnen, in der Vergangenheit unter anderem daran gescheitert, daß der Bedarf an elektrischer Energie nicht abgesichert werden konnte. Der größte Nachteil an dieser bekannten Technik ist jedoch, daß bisher ein sicheres Halten der zueinander beweglichen Maschinenelemente im antriebslosen, d.h. stromlosen Zustand nicht realisiert werden konnte.

Es ist daher Aufgabe der vorliegenden Erfindung eine Antriebsvorrichtung der eingangs genannten Art bereitzustellen, welche ein sicheres Halten der zueinander beweglichen Maschinenelemente im antriebslosen, d.h. stromlosen Zustand gewährleistet.

Gelöst wird diese Aufgabe durch eine gattungsgemäße Antriebsvorrichtung gemäß den Merkmalen der unabhängigen Ansprüche.

Vorteilhafte Ausgestaltungen sind in den Unteransprüchen beschrieben.

Bei einer erfindungsgemäßen Antriebsvorrichtung zur linearen Bewegung zweier Maschinenteile von Baumaschinen zueinander liegt im antriebslosen bzw. stromlosen Zustand der Antriebsvorrichtung mindestens ein Verriegelungselement an einem der beiden Maschinenteile an, so daß eine lineare Bewegung der beiden Maschinenteile zueinander verhindert wird.

In einer vorteilhaften Ausgestaltung der erfindungsgemäßen Antriebsvorrichtung ist der elektromagnetische Linearantrieb ein linearer magnetischer Kettenantrieb, wobei der Kettenantrieb jeweils zwei in Wirkverbindung zueinander stehende Ketten mit Permanentmagneten aufweist, wobei jede Kette in einem entsprechenden Maschinenteil angeordnet ist. Zur linearen Bewegung der Maschinenteile können entweder beide Ketten zueinander bewegt werden oder es bewegt sich jeweils nur eine der beiden Ketten relativ zur anderen. Dabei können die Ketten zueinander symmetrisch oder asymmetrisch angeordnet sein.

Zur Energieeinsparung ist es des weiteren möglich, daß die Magnetfelder des elektro-magnetischen Linearantriebs nur in einem Teilbereich des Maschinenteils bzw. der Maschinenteile wirksam sind.

In einer weiteren vorteilhaften Ausgestaltung der Erfindung wird das Verriegelungselement im stromlosen Zustand des Linearantriebs durch eine Federvorrichtung in Richtung des zweiten Maschinenteils gedrückt und im bestromten Zustand des Linearantriebs wird das Verriegelungselement durch eine elektrische Betätigungsvorrichtung vom zweiten Maschinenteil weggeschwenkt. Die Federkraft der Federvorrichtung ist dabei einstellbar und so an die Ausmaße und das Gewicht der Maschinenteile anpassbar.

Es ist auch möglich, daß das zweite Maschinenteil, an dem das Verriegelungselement anliegt, mindestens einen Vorsprung und/oder eine Einkerbung am Außenumfang aufweist in die das Verriegelungselement eingreift. Damit erhöht sich der Verriegelungs- und Halteeffekt zwischen den Maschinenteilen.

Zur Erhöhung der Funktionssicherheit mindestens zwei voneinander unabhängige Verriegelungselemente an einem Maschinenteil an.

In einer weiteren vorteilhaften Ausgestaltung der erfindungsgemäßen Antriebsvorrichtung weist die Antriebsvorrichtung eine elektronische Steuerung auf.

In einer weiteren vorteilhaften Ausgestaltung der erfindungsgemäßen Antriebsvorrichtung wird die Antriebsvorrichtung über einen direkt an einen Nebenantrieb eines Maschinen- oder Fahrzeugmotors angeflanschten Stromgenerator mit elektrischer Energie versorgt. Damit ist es vorteilhafterweise möglich, daß die Antriebsvorrichtung ohne zusätzliches Antriebsaggregat aus dem Stromnetz der Baumaschine oder des Fahrzeugs gespeist werden kann. Dadurch ergibt sich eine erhöhte Flexibilität beim Maschineneinsatz, zudem wird eine zusätzliche Abgasbelastung der Umwelt vermieden.

Verwendung findet die erfindungsgemäße Antriebsvorrichtung insbesondere zur linearen Bewegung zweier Maschinenteile von stationären oder mobilen Arbeitsbühnen oder Hubarbeitsbühnen zueinander. Dabei sind die Maschinenteile als Teleskoparme ausgebildet. Durch die unterschiedliche Polarisierung der Magnetfelder des elektromagnetischen Linearantriebs ergibt sich ein Aus- und Einfahren der Teleskoparme.

Weitere erfindungsgemäße Verwendungsmöglichkeiten der vorliegend beschriebenen Antriebsvorrichtung ergeben sich bei der Bewegung zweier Maschinenteile von Autokranen, Aufzügen oder Schrägaufzügen, Gabelstaplern oder Hochregalen im Bereich der Lagertechnik.

Weitere Einzelheiten, Merkmale und Vorteile der Erfindung sind in dem nachfolgend beschriebenen Ausführungsbeispiel näher erläutert.

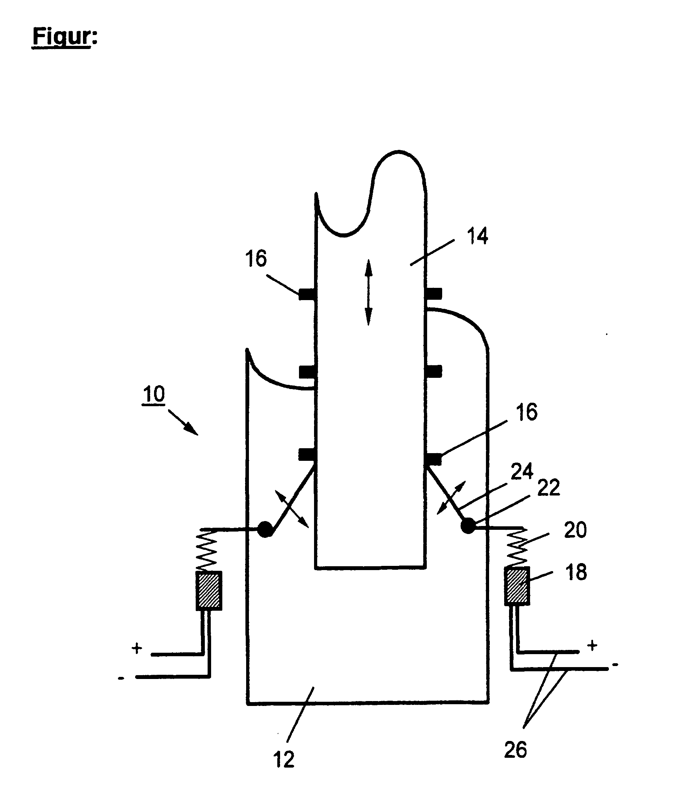

Die Figur zeigt in einer schematisch dargestellten Schnittansicht einen Teil einer Antriebsvorrichtung 10 zur linearen Bewegung zweier Maschinenteile 12, 14 von Baumaschinen zueinander. Die Antriebsvorrichtung 10 besteht dabei aus einem elektromagnetischen Linearantrieb (nicht dargestellt).

Man erkennt, daß in dem Ausführungsbeispiel zwei Teleskoparme 12, 14 einer stationären oder mobilen Hubarbeitsbühne (nicht dargestellt) handelt. Des weiteren erkennt man, daß im dargestellten stromlosen Zustand der Antriebsvorrichtung 10 zwei Verriegelungselemente 24 an dem Teleskoparm 14 anliegen und somit eine lineare Bewegung der beiden Teleskoparme 12, 14 zueinander verhindert wird.

Die Verriegelungselemente 24 werden dabei im stromlosen Zustand des Linearantriebs durch jeweils eine Federvorrichtung 20 in Richtung des zweiten Teleskoparms 14 gedrückt. Im bestromten Zustand des Linearantriebs werden die Verriegelungselemente 24 durch jeweils eine elektrische Betätigungsvorrichtung 18, welche die Federvorrichtung 20 zusammenzieht bzw. -drückt und über eine Gelenkvorrichtung 22 vom zweiten Maschinenteil 14 weggeschwenkt. Die Betätigungsvorrichtungen 18 werden dabei über elektrische Leitungen 26 mit elektrischer Energie versorgt. Wie auch die Antriebsvorrichtung 10 sind die Leitungen 26 über einen direkt an einen Nebenantrieb eines Maschinen- oder Fahrzeugmotors angeflanschten Stromgenerator angeschlossen. Die beiden Verriegelungselemente 24 sind voneinander unabhängig steuerbar, so daß z.B. bei einem Bruch einer Federvorrichtung 20 oder einem Ausfall einer Betätigungsvorrichtung 18 noch immer eine zuverlässige Verriegelung gewährleistet ist. Die Verriegelungselemente 24 können zusätzliche eine Haftoberfläche aufweisen. Diese kann durch ein Aufrauhen bzw. ein Profilieren der Verriegelungselemente oder den Auftrag einer Haftschicht aus Kunststoff oder einem anderen geeigneten Material erzeugt werden.

Des weiteren erkennt man, daß der zweite Teleskoparm 14, an dem die Verriegelungselemente 24 anliegen, mehrere Vorsprünge 16 am Außenumfang aufweist, in welche die Verriegelungselemente 24 jeweils eingreifen. Es ist aber auch möglich, daß der Teleskoparm 14 statt den Vorsprüngen 16 entsprechende Einkerbungen an seinem Außenumfang aufweist.

Die Antriebsvorrichtung 10 weist üblicherweise eine elektronische Steuerung auf.

## Patentansprüche

1. Antriebsvorrichtung zur linearen Bewegung zweier Maschinenteile von Baumaschinen zueinander, wobei die Antriebsvorrichtung aus einem elektromagnetischen Linearantrieb besteht,
**dadurch gekennzeichnet,**
**daß** im stromlosen Zustand der Antriebsvorrichtung (10) mindestens ein Verriegelungselement (24) an einem der beiden Maschinenteile (12, 14) anliegt und somit eine lineare Bewegung der beiden Maschinenteile (12, 14) zueinander verhindert wird, wobei die Maschinenteile (12, 14) als Teleskoparme ausgebildet sind.

2. Antriebsvorrichtung nach Anspruch 1,
**dadurch gekennzeichnet,**
**daß** der elektromagnetische Linearantrieb ein linearer magnetischer Kettenantrieb ist, wobei der Kettenantrieb jeweils zwei in Wirkverbindung zueinander stehende Ketten mit Permanentmagneten aufweist, wobei jede Kette in einem entsprechenden Maschinenteil angeordnet ist.

3. Antriebsvorrichtung nach Anspruch 2,
**dadurch gekennzeichnet,**
**daß** die Ketten zueinander asymmetrisch oder symmetrisch angeordnet sind.

4. Antriebsvorrichtung nach einem der vorhergehenden Ansprüche,
**dadurch gekennzeichnet,**
**daß** das Verriegelungselement (24) im stromlosen Zustand des Linearantriebs durch eine Federvorrichtung (20) in Richtung des zweiten Maschinenteils (14) gedrückt wird und im bestromten Zustand des Linearantriebs das Verriegelungselement (24) durch eine elektrische Betätigungsvorrichtung (18) vom zweiten Maschinenteil (14) weggeschwenkt wird.

5. Antriebsvorrichtung nach einem der vorhergehenden Ansprüche,
**dadurch gekennzeichnet,**
**daß** das zweite Maschinenteil (14), an dem das Verriegelungselement (24) anliegt, mindestens einen Vorsprung (16) und/oder eine Einkerbung am Außenumfang aufweist in die das Verriegelungselement (24) eingreift.

6. Antriebsvorrichtung nach einem der vorhergehenden Ansprüche,
**dadurch gekennzeichnet,**
**daß** mindestens zwei voneinander unabhängige Verriegelungselemente (24) an einem Maschinenteil (14) anliegen.

7. Antriebsvorrichtung nach einem der vorhergehenden Ansprüche,
**dadurch gekennzeichnet,**
**daß** die Antriebsvorrichtung (10) eine elektronische Steuerung aufweist.

8. Antriebsvorrichtung nach einem der vorhergehenden Ansprüche,
**dadurch gekennzeichnet,**
**daß** die Antriebsvorrichtung (10) über einen direkt an einen Nebenantrieb eines Maschinen- oder Fahrzeugmotors angeflanschten Stromgenerator mit elektrischer Energie versorgt wird.

9. Verwendung einer Antriebsvorrichtung nach einem der Ansprüche 1 bis 8 zur linearen Bewegung von mindestens zwei Teleskoparmen von stationären oder mobilen Arbeitsbühnen oder Hubarbeitsbühnen zueinander.

10. Verwendung einer Antriebsvorrichtung nach einem der Ansprüche 1 bis 8 zur linearen Bewegung zweier Maschinenteile von Autokranen zueinander.

11. Verwendung einer Antriebsvorrichtung nach einem der Ansprüche 1 bis 8 zur linearen Bewegung zweier Maschinenteile von Aufzügen oder Schrägaufzügen zueinander.

12. Verwendung einer Antriebsvorrichtung nach einem der Ansprüche 1 bis 8 zur linearen Bewegung zweier Maschinenteile von Gabelstaplern zueinander.

13. Verwendung einer Antriebsvorrichtung nach einem der Ansprüche 1 bis 8 zur linearen Bewegung zweier Maschinenteile von Hochregalen im Bereich der Lagertechnik zueinander.

## Claims

1. A drive device for the linear movement of two machine parts of construction machines relative to each other, wherein the drive device consists of an electromagnetic linear drive,
**characterised in that**
in the currentless condition of the drive device (10) at least one locking element (24) bears against one of the two machine parts (12, 14) and thus a linear movement of the two machine parts (12, 14) relative to each other is prevented, wherein the machine parts (12, 14) are in the form of telescopic arms.

2. A drive device according to claim 1 **characterised in that** the electromagnetic linear drive is a linear magnetic chain drive, wherein the chain drive has two respective chains, which are operatively connected to each other, with permanent magnets, wherein each chain is arranged in a corresponding machine part.

3. A drive device according to claim 2 **characterised in that** the chains are arranged asymmetrically or symmetrically relative to each other.

4. A drive device according to one of the preceding claims **characterised in that** in the currentless condition of the linear drive the locking element (24) is urged by a spring device (20) in the direction of the second machine part (14) and in the powered condition of the linear drive the locking element (24) is pivoted away from the second machine part (14) by an electrical actuating device (18).

5. A drive device according to one of the preceding claims **characterised in that** the second machine part (14) against which the locking element (24) bears has at least one projection (16) and/or recess at the outside periphery, into which the locking element (24) engages.

6. A drive device according to one of the preceding claims **characterised in that** at least two mutually independent locking elements (24) bear against a machine part (14).

7. A drive device according to one of the preceding claims **characterised in that** the drive device (10) has an electronic control means.

8. A drive device according to one of the preceding claims **characterised in that** the drive device (10) is supplied with electrical power by way of a current generator flange-mounted directly to a secondary drive of a machine or vehicle motor.

9. Use of a drive device according to one of claims 1 to 8 for the linear movement of at least two telescopic arms of stationary or mobile working platforms or lifting working platforms relative to each other.

10. Use of a drive device according to one of claims 1 to 8 for the linear movement of two machine parts of mobile cranes relative to each other.

11. Use of a drive device according to one of claims 1 to 8 for the linear movement of two machine parts of lifts or inclined hoists relative to each other.

12. Use of a drive device according to one of claims 1 to 8 for the linear movement of two machine parts of fork lift trucks relative to each other.

13. Use of a drive device according to one of claims 1 to 8 for the linear movement of two machine parts of high-level shelf arrangements in the area of storage technology relative to each other.

## Revendications

1. Dispositif d'entraînement pour le mouvement linéaire de deux pièces de machines d'engins de chantier, l'une par rapport à l'autre, où le dispositif d'entraînement se compose d'un entraînement linéaire électromagnétique,
**caractérisé**
**en ce que**, lorsque le dispositif d'entraînement (10) n'est pas alimenté en courant électrique, au moins un élément de verrouillage (24) est en appui sur l'une des deux pièces (12, 14) de la machine et, ainsi, empêche un mouvement linéaire des deux pièces (12, 14) de la machine, l'une par rapport à l'autre, où les pièces de la machine (12, 14) sont conçues comme des bras télescopiques.

2. Dispositif d'entraînement selon la revendication 1, **caractérisé en ce que** le mouvement linéaire électromagnétique est un entraînement magnétique linéaire par chaîne, où l'entraînement par chaîne présente à chaque foie deux chaînes - en liaison active l'une par rapport à l'autre - comprenant des aimants permanents, où chaque chaîne est disposée dans une pièce correspondante de la machine.

3. Dispositif d'entraînement selon la revendication 2, **caractérisé en ce que** les chaînes sont disposées de manière asymétrique ou symétrique l'une par rapport à l'autre.

4. Dispositif d'entraînement selon l'une quelconque des revendications précédentes, **caractérisé en ce que** l'élément de verrouillage (24), lorsque l'entraînement linéaire n'est pas alimenté en courant électrique, est pressé par un dispositif à ressort (20) en direction de la seconde pièce (14) de la machine et, lorsque l'entraînement: linéaire est alimenté en courant électrique, l'élément de verrouillage (24) est écarté de la seconde pièce (14) de la machine, par un dispositif d'actionnement électrique (18).

5. Dispositif d'entraînement selon l'une quelconque des revendications précédentes, **caractérisé en ce que** la seconde pièce (14) de la machine, sur laquelle est en appui l'élément de verrouillage (24), présente au moins, sur la circonférence extérieure, une partie saillante (16) et/ou une encoche dans laquelle s'engage l'élément de verrouillage (24).

6. Dispositif d'entraînement selon l'une quelconque des revendications précédentes, **caractérisé en ce qu'**au moins deux éléments de verrouillage (24), indépendants l'un de l'autre, sont en appui sur une pièce (14) de la machine.

7. Dispositif d'entraînement selon l'une quelconque des revendications précédentes, **caractérisé en ce que** le dispositif d'entraînement (10) présente une commande électronique.

8. Dispositif d'entraînement selon l'une quelconque des revendications précédentes, **caractérisé en ce que** le dispositif d'entraînement (10) est alimenté en énergie électrique par un générateur de courant bridé directement sur une commande auxiliaire d'un moteur de machine ou de véhicule.

9. Utilisation d'un dispositif d'entraînement selon l'une quelconque des revendications 1 à 8, pour le mouvement linéaire d'au moins deux bras télescopiques - l'un par rapport à l'autre - de plates-formes de travail fixes ou mobiles, ou bien de plates-formes pour travaux de levage.

10. Utilisation d'un dispositif d'entraînement selon l'une quelconque des revendications 1 à 8, pour le mouvement linéaire de deux pièces de machines - l'une par rapport à l'autre - de grues automotrices.

11. Utilisation d'un dispositif d'entraînement selon l'une quelconque des revendications 1 à 8, pour le mouvement linéaire de deux pièces de machines - l'une par rapport à l'autre - d'élévateurs ou d'élévateurs à plan incliné.

12. Utilisation d'un dispositif d'entraînement selon l'une quelconque des revendications 1 à 8, pour le mouvement linéaire de deux pièces de machines - l'une par rapport à l'autre - de chariots élévateurs à fourches.

13. Utilisation d'un dispositif d'entraînement selon l'une quelconque des revendications 1 à 8, pour le mouvement linéaire de deux pièces de machines - l'une par rapport à l'autre - de rayonnages surélevés, dans le domaine de la technique de stockage.
